Europäisches Patentamt

European Patent Office

Office européen des brevets

(19)

(11) Veröffentlichungsnummer: **0 257 596 B1**

(12) **EUROPÄISCHE PATENTSCHRIFT**

(45) Veröffentlichungstag der Patentschrift: **11.11.92**

(51) Int. Cl.⁵: **G07F 7/08**, G07F 7/02

(21) Anmeldenummer: **87112186.9**

(22) Anmeldetag: **21.08.87**

(54) **Verfahren zum Erkennen einer missbräuchlichen Benutzung von Chipkarten.**

(30) Priorität: **26.08.86 DE 3628867**

(43) Veröffentlichungstag der Anmeldung:
**02.03.88 Patentblatt 88/09**

(45) Bekanntmachung des Hinweises auf die
Patenterteilung:
**11.11.92 Patentblatt 92/46**

(84) Benannte Vertragsstaaten:
**AT CH DE LI NL**

(56) Entgegenhaltungen:
**EP-A- 0 185 365**
**EP-A- 0 216 375**
**FR-A- 2 441 218**
**US-A- 3 610 889**
**US-A- 4 510 382**

**IBM TECHNICAL DISCLOSURE BULLETIN,**
**Band 16, Nr. 1, Juni 1973, Seiten 286-287,**
**New York, US; M.A. AUSLANDER et al.:**
**"Magnetic card access control"**

(73) Patentinhaber: **SIEMENS AKTIENGESELL-**
**SCHAFT**
**Wittelsbacherplatz 2**
**W-8000 München 2(DE)**

(72) Erfinder: **Heberle, Wolfgang, Dipl.-Phys.**
**Aussere Münchener Strasse 9**
**W-8190 Wolfratshausen(DE)**
Erfinder: **Ludwig, Max, Dipl.-Ing.**
**Am Kornacker 18 B**
**W-8000 München 70(DE)**

## Beschreibung

Die Anmeldung beinhaltet ein Verfahren zum Erkennen einer mißbräuchlichen Benutzung von auf Chipkarten gespeicherten personenbezogenen Daten sowie von damit durchführbaren Transaktionen.

Kreditkarten mit integriertem Chip besitzen viele Möglichkeiten zur Sicherung und Behandlung ihres Inhalts sowie der damit durchzuführenden Transaktionen. Dabei sind Maßnahmen zur Sicherung der personenbezogenen und anderen individuellen Daten auf der Karte vorrangig, die zur Verhinderung oder Bekämpfung von Totalfälschungen, Duplizierungen oder Simulationen getroffen werden müssen. Bei allgemeinen Transaktionen (z.B. Bankdienste) müssen die größten Aufwendungen zur Sicherung der auf der Karte aufgebrachten Daten gemacht werden. Hierzu sind Verfahren mit aktiver Verschlüsselung von variablen Parametern in der Chipkarte sowie Verfahren mit festen Parametern in der Chipkarte bekannt, wobei beim letzteren Verfahren die festen Parameter bei der Kartenherstellung mit einem Geheimschlüssel kartenspezifisch errechnet und in der Karte unveränderbar eingeschrieben werden.

Für eine spezielle Kreditkarte, die in erster Linie nur zum Bezahlen einer Dienstleistung, z.B. Telefonieren an öffentlichen Fernsprechern bestimmt ist, weisen jedoch beide Verfahren Nachteile auf.

Chipkarten mit aktiver Verschlüsselung in der Karte erfordern einen zu großen Aufwand bei der Karte (Mikroprozessor, Geheimschlüssel) und bei der Gegenstelle (gesicherte Box mit Geheimschlüssel), wenn die relativ geringe Durchschnittsgebühr für jedes Telefonat sowie die große Verbreitung öffentlicher Fernsprecher in Betracht gezogen wird.

Demgegenüber haben Chipkarten mit festen Parametern zwar den Vorteil einer einfachen Dekodierung bei der Gegenstelle, jedoch muß es hierbei als nachteilig erachtet werden, daß ein relativ hoher Speicheraufwand für einen hinreichend sicheren Parameter getrieben werden muß, wodurch wiederum an der Gegenstelle lange Prüfzeiten entstehen. Da bei festen Parametern die entsprechenden Daten aus den Originalkarten ausgelesen oder bei der Übertragung abgehört werden können, lassen sich diese Karten auf leichte Weise duplizieren.

Es sind weiterhin Chipkarten mit einem sogenannten intelligenten Speicherchip bekannt. Hierbei sind die der Sicherung dienenden Daten und eine auf dem Chip mitintegrierte Sicherheitslogik festgelegt. Dadurch können auf vielfältige Weise die kontenspezifischen Daten geprüft werden, z.B. ob ein originales und zugelassenes Chip vorliegt, ob der Inhalt und das Segmentverhalten stimmt sowie ein Geheimcode vorhanden ist.

Aufgrund dieser speziellen Überprüfungen von Hard- und Software lassen sich soviele Hindernisse für Fälscher aufbauen, daß eine wirtschaftliche Herstellung und Verteilung von gefälschten Telefonkarten weitgehend verhindert wird. Es ist jedoch bei den genannten Karten ein gewisses Restrisiko nicht auszuschließen, mit Manipulationen die Sicherheitsgrenze zu durchbrechen. Transaktionen mit einer gefälschten Karte zu Lasten eines gültigen Kontos lassen sich jedoch nur durch Reklamation des rechtmäßigen Kontoinhabers aufdecken. Da bei einem Fernmeldekonto lediglich monatlich eine Rechnungserstellung erfolgt, kann ein Fälscher maximal einen Monat lang auf Kosten des rechtmäßigen Kartenbesitzers telefonieren. Diese relativ lange Wirkungsdauer der Fälschung erschwert den Nachweis einer rechtmäßigen Benutzung innerhalb dieses Zeitraumes.

Der vorliegenden Erfindung liegt daher die Aufgabe zugrunde, ein Verfahren zum Erkennen einer mißbräuchlichen Benutzung von Chipkarten aufzuzeigen, durch das in möglichst kurzer Zeit die Verwendung einer gefälschten Chipkarte erkannt wird.

Diese Aufgabe wird dadurch gelöst, daß auf der Chipkarte ein mehrstelliger Zähler für verbrauchte Werteinheiten vorgesehen ist, der bei Erstellung der Karte mit einer individuellen Zufallszahl versehen wird, wobei diese Zufallszahl in einem zentralen Prüfspeicher mit der entsprechenden Chipkartennummer gespeichert wird, daß weiterhin bei Benutzung der Chipkarte der Zähler die verbrauchten Werteinheiten weiterzählt und der jeweilige neue Zählerstand dem zentralen Prüfspeicher zusammen mit der Chipkartennummer, tagesbezogenen Daten (Datum, Uhrzeit) und den verbrauchten Werteinheiten pro Gespräch gemeldet und dort in einer Prüfdatei nach den tagesbezogenen Daten sortiert und gespeichert wird, wobei jeder in der Prüfdatei ankommende Datensatz zeitlich eingeordnet und der letzte Zählerstand mit dem vorhergehenden verglichen wird.

Durch Verwendung eines Werteinheiten speichernden Zählers, z.B. Gebühreneinheiten bei Telefongesprächen und einer zentralen Prüfeinrichtung kann die Wirkungsdauer einer gefälschten Chipkarte auf durchschnittlich einen Tag gesenkt werden. Dadurch entfällt jeder Anreiz zur Herstellung einer gefälschten Telefonkreditkarte bzw. deren Duplizierung oder Simulation. Dabei genügt normalerweise bei der Originalkarte die Feststellung, daß der neue Zählerstand höher ist als der vorhergehende. Eine exakte Überprüfung ist auch möglich, wenn man die neuen Einheiten des letzten Gespräches hinzuzählt. Dadurch ergibt sich eine Folge von kartenspezifischen Zählerständen auf der Originalkarte. Beim Auftreten eines mit einer gefälschten Karte erzeugten Datensatzes ergibt sich eine Differenz der Zählerstände, da eine vollständige Gleichheit der speziellen Daten (Einheiten pro Gespräch, Datum und Uhrzeit, alter Zählerstand) bei Benutzung der Originalkarte und der gefälschten Karte nicht erzielbar ist. Daher wird die Verwendung einer gefälschten Karte im allgemeinen bereits bei der Eingabe des ersten Datensatzes erkannt. Damit kann durch sofortige Eintragung der Nummer der gefälschten Karte in eine Sperrdatei ein weiterer Mißbrauch ausgeschlossen werden.

Ein Schutz für den rechtmäßigen Karteninhaber läßt sich z.B. dadurch erzielen, daß der Datensatz der gefälschten Karte als nicht zugehörig zum Datensatz der Originalkarte erkannt wird, und somit bei der Rechnungserstellung unterdrückt werden kann.

Hierbei besteht außerdem die Möglichkeit, durch direkten Vergleich der mit der gefälschten und der originalen Karte erzeugten Daten in entsprechenden Speicherplätzen die gefälschte Karte schon vor oder schon zu Beginn eines Gespräches zu sperren, so daß der rechtmäßige Karteninhaber seine Karte weiterhin benutzen kann.

Bei einer international verwendeten Telefonkreditkarte kann z.B. der Zählerstand der Gebühreneinheiten auch dann durch Gebühreneinheiten weitergezählt werden, wenn die Gebühreneinheiten in unterschiedlichen Ländern unterschiedliche Geldwerte aufweisen. Hierzu kann die Prüfung lediglich auf das Zählen der Gebühreneinheiten beschränkt werden. Ist z.B. ein Grenzzähler für die Benutzung im Ausland vorgesehen, der innerhalb einer bestimmten Zykluseinheit die im Ausland verbrauchten Einheiten bis zu einem vorgegebenen Grenzwert zählt, so kann er ein Teil innerhalb des Gebühreneinheitenzählers sein. Hierzu muß ein Zurücksetzen des Grenzzählers nach einer Zykluszeit zu einem erneuten Weiterzählen des gesamten Gebühreneinheitszählers führen.

## Patentansprüche

1. Verfahren zum Erkennen einer mißbräuchlichen Benutzung von auf Chipkarten für Münzfernsprecher gespeicherten personenbezogenen Daten sowie von damit durchführbaren Transaktionen,
**dadurch gekennzeichnet,**
daß auf der Chipkarte ein mehrstelliger Zähler für verbrauchte Werteinheiten vorgesehen ist, der bei Erstellung der Karte mit einer individuellen Zufallszahl versehen wird, wobei diese Zufallszahl in einem zentralen Prüfspeicher mit der entsprechenden Chipkartennummer gespeichert wird, daß weiterhin bei Benutzung der Chipkarte der Zähler die verbrauchten Werteinheiten weiterzählt und der jeweilige neue Zählerstand dem zentralen Prüfspeicher zusammen mit der Chipkartennummer, tagesbezogenen Daten (Datum, Uhrzeit) und den verbrauchten Werteinheiten pro Gespräch gemeldet und dort in einer Prüfdatei nach den tagesbezogenen Daten sortiert und gespeichert wird, wobei jeder in der Prüfdatei ankommende Datensatz zeitlich eingeordnet und der letzte Zählerstand mit dem vorhergehenden verglichen wird.

## Claims

1. Method for detecting misuse of personal data stored on IC cards for payphones and of transactions which can be carried out with said cards, characterised in that a multidigit counter is provided on the IC card for used value units, which counter is provided with an individual random number when the card is manufactured, this random number being stored in a central test memory with the corresponding IC card number, in that, in addition, when the IC card is used the counter counts on the used value units and the respective new counter state is reported to the central test memory together with the IC card number, data relating to the day (date, time) and the used value units per conversation and classified there in a test file in accordance with the data relating to the day, each data set which arrives in the test file being ordered chronologically and the last counter state being compared with the previous one.

## Revendications

1. Procédé pour identifier une utilisation frauduleuse de données personnelles mémorisées sur des cartes à puce pour des téléphones à prépaiement, ainsi que de transactions pouvant être exécutées avec ces données,
caractérisé par le fait
que sur la carte à puce il est prévu un compteur à plusieurs chiffres pour des unités de valeur utilisées, et qui, lors d'établissement de la carte, est pourvu d'un nombre aléatoire individuel qui est mémorisé dans une mémoire centrale de contrôle avec le numéro correspondant de la carte à puce, qu'en outre, lors de l'utilisation de la carte à puce, le compteur décompte les unités de valeur utilisées, et le nouvel état de comptage est signalé à la mémoire centrale de contrôle, conjointement avec le numéro de la carte à puce, des données concernant le jour (date, heure) et les unités de valeurs utilisées pour chaque conversation et est échantillonné et mémorisé en cet endroit dans un fichier de contrôle en fonction des données rapportées au jour, chaque ensemble de données, qui arrive dans le fichier de contrôle, étant ordonné dans le temps et le dernier état de comptage étant comparé à l'état de comptage précédent.